# EUROPEAN PATENT SPECIFICATION

(11) **EP 1 835 689 B1**
(45) Date of publication and mention of the grant of the patent: **04.06.2014**
(21) Application number: 06290408.1
(22) Date of filing: 13.03.2006
(51) Int. Cl.: H04L 29/06

(54) **Context enriched communication system and method**
Kontext angereichertes Kommunikationssystem und Methode
Système et méthode de communication enrichis par contexte

(43) Date of publication of application: 19.09.2007
(73) Proprietor: Alcatel Lucent, 75007 Paris (FR)
(72) Inventor: Coppens, Toon, 2500 Lier (BE); Hemmeryckx-Deleersnijder, Bart Karel, 9090 Melle (BE); De Mondt, Hans, 2960 Brecht (BE); Van Wonterghem, Geert Arthur Edith, 9900 Eeklo (BE)
(74) Representative: ALU Antw Patent Attorneys

(56) References cited:
- US-A1- 2004 230 651
- US-A1- 2005 004 985
- US-B1- 6 317 777

## Description

### Field of the Invention

The present invention generally relates to enriching communication sessions with contextual information, for example information related to the location, time zone or calendar of a person participating to the communication session, live or non-live content such as video streams, pictures, text documents, presentations, drawings, audio fragments, multimedia content, passed activities, etc. that a person participating to the communication session desires to share with the other participants during the communication session. In the context of the patent application, communication session must be interpreted broadly to cover any voice-, video-, text-, etc. based conversation or conference between two or more persons. Examples of communication sessions are fixed or mobile telephone calls, telephone conferences, video conferences, chat sessions, virtual meetings, etc., typically through end-user devices or terminals like telephone sets, IP phones, cellular or mobile phones, TV sets, set-top boxes (STBs), personal computers (PCs), etc. that connect over a communication network via a communication server.

### Background of the Invention

An existing solution that enables enriching communication sessions with context information is Microsoft's Netmeeting application, whose features are described at the following URL:
http://www.microsoft.com/windows/netmeeting
This conferencing application enables users of MS Windows based PCs to set-up multi-point text conferences (real-time text chatting), as well as point-to-point audio and video communication sessions. Netmeeting supports white boarding functionalities, as well as transfer of files, slides, media, etc. during the communication session.

Another audio- and videoconferencing solution with context sharing facilities is the SunForum software suite. It has a file transfer utility enabling users to transfer files to other conference participants, a shared whiteboard utility enabling users to share a whiteboard with other PC users running a whiteboard application, a clipboard utility to cut and paste context information from and to the whiteboard, and a chat utility enabling instant text messaging between conference participants. More details on the SunForum software suite can be found in the datasheet downloadable from the Internet via the following URL:
http:/lwww.sun.com/desktop/products/software/sunforum/datasheet.pdf

The major problem with existing applications like Netmeeting and SunForum is that the transfer of contextual information (contextual information being a limited fixed list, and not discovered), requires one or more explicit actions or manipulations from the context owner in order to share the context information. Enriching communication sessions with contextual information is not automated, also no automated context discovery is done and there is no association of contextual data with different parties participating to communication sessions.

Another prior art solution is Apple's iChat AV videoconferencing application advertised at:
hftp://www.apple.com/macosx/features/ichat/
iCHAT AV enables multi-user audio and video conferencing. It is possible with this application, to setup an own personalized composition of the screen (graphical representation or skin) but there is no or only very limited (accidental) context information provided, e.g. only background noise indicative for the location of the user but no content is available to the other party.

A more advanced videoconference system is described in United States Patent Application US 2004/0230651, entitled "Method and System for Delivering Produced Content to Passive Participants of a Videoconference". The conferencing system known from US 2004/0230651 distinguishes between active participants (media contributors) and passive participants (observers), and contains a virtual producer (162 in US 2004/0230651) that dynamically determines and selects media for distribution to passive participants. The selection involves media rankling and media filtering based on intelligence gathered through monitoring the interests and behaviour of the active participants. Certain content may be restricted from passive participants through system rules or collaboration rules (i.e. access rights in the context of the current patent application).

A drawback of the system described in US 2004/0230651 is that it is rather complex because it distinguishes between active and passive participants, because it requires interest and behaviour tracking of active participants, and because it requires analysing and filtering the media according to the interest profiles. In addition, the system of US 2004/0230651 remains limited to information supplied by the active participants.

Fig. 1 shows a prior art system like the one known from US 2004/0230651 wherein a first user 101 equipped with a TV set and set-top box establishes a video chat session with a second user 102 through a communication server 103 (MCU 112 in US 2004/0230651). The network in Fig. 1 further includes a context vault 104 (media mixer 120 in US 2004/0230651) and a community context manager 105 (virtual producer module 162) that will enrich the video chat session with context information, such that for instance the first user 101 can browse on his/her TV through context information that has been set accessible by the second user 102 and vice versa. During the video chat communication session, the first user 101 and second user 102 are given the possibility to browse through the other ones context, depending on the access rights that have been granted by the context owner. These access rights are defined upfront through profiles, stored and managed by the community context manager 105. The first user 101 will for instance be able to select vacation photos of the second user 102 and watch them during the video chat session with the second user 102. In the meantime, the second user 102 is for instance able to check the calendar of the first user 101, but not the photos thereof because these haven't been made available for the second user 102.

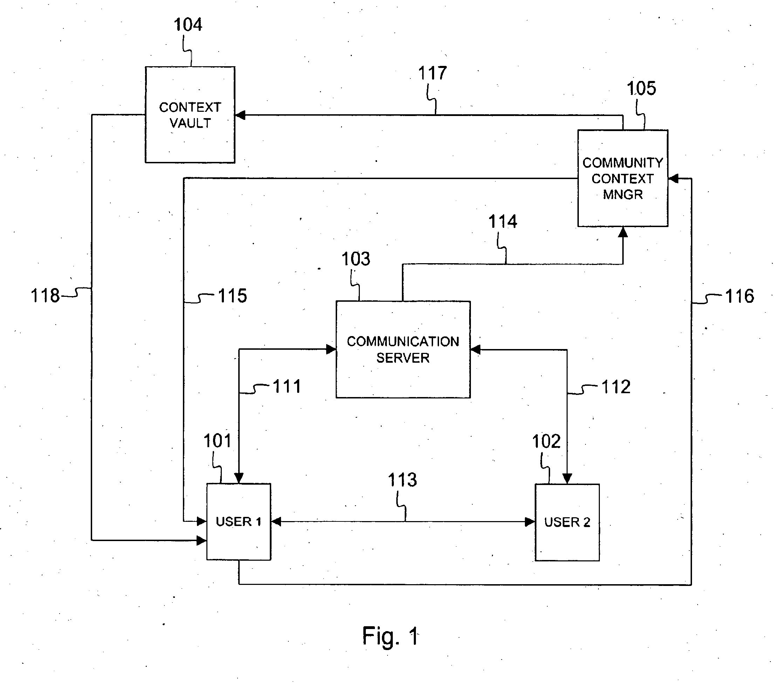

Fig. 1 further illustrates a possible scenario followed in a prior art system like the one disclosed in US 2004/0230651 to enrich the video chat session between the first user 101 and second user 102 with context information kept in the context vault 104 (media mixer 120 in US 2004/0230651). In a first step 111, a communication session is requested by the first user 101 and the request is handled by the communication server 103 (MCU 112 in US 2004/0230651). The communication server 103 polls the availability of the second user 102 in step 112 and if successful will connect both peers. The video chat session is setup between the two users 101 and 102 in step 113. The communication server 103 now verifies with the community context manager 105 which context information associated with the second user 102 can be made available to the first user 101, depending on the rights that the second user 102 has granted to the first user 101. Vice versa, the communication server 103 checks with the community context manager 105 what context information related to the first user 101 can be made available to the second user 102 according to the access right pre-defined by the first user 101 in the community context manager 105. This verification process is referenced by 114 in Fig. 1. The list of context information that can be accessed by the first user 101 is then made available to the preferred terminal of the first user 101 in step 115. It is noticed that the preferred terminal (e.g. a PC) can be different from the communication terminal (e.g. the TV set with set-top box). Similarly, the second user 102 gets a list of context information related to the first user 101 that can be accessed during the video chat session. The first user 101 can browse through the list of available context information associated with the second user 102 and select a category or item to be shown, for instance a particular collection of holiday pictures of the second user 102. This request is sent to the community context manager 105, as is indicated by the arrow 116 in Fig. 1. The community context manager 105 maps the request to the right context item inside the context vault 104 and requests the context vault 104 to send the item to the first user 101. This request is referenced by 117 in Fig. 1. At last, the context vault 104 provides the requested context item to the preferred terminal (e.g. the PC) of the first user 101 in step 118 such that the first user 101 can watch the holiday pictures of the second user 102 on his PC monitor while both users are having a video chat session through their respective TV sets and set-top boxes. Although not indicated in Fig. 1, step 116 (i.e. the selection of a context item), step 117 (i.e. the mapping of the selection to a context item in the context vault and instructing of the context vault), and step 118 (i.e. the delivery of the selected context item) are simultaneously carried out for the second user 102 who desires to access certain context information associated with the first user 101 during the video chat session.

It is an object of the current invention to provide a system and method for communication sessions between two or more users that overcomes the above highlighted disadvantages of the existing solutions. In particular, it is the objective to enable automated context enriched communication sessions that are more interesting, relevant and attractive to participants, and that do not limit the provided media to be contributed exclusively by active participants.

### Summary of the Invention

According to the current invention, the above defined objective is realised through a communication system comprising a communication network for interconnecting a plurality of users and a communication server for establishing a communication session between at least a first user and a second user, the communication system further comprising:
a. a context vault for maintaining context information and/or context locators in relation to one or more users; and
b. a community context manager for maintaining access rights in relation to the context information; and
c. the communication server being adapted to automatically retrieve context information and/or context locators in relation to the first user from the context vault and being adapted to automatically provide the context information or parts thereof during the communication session to the second user in accordance with the access rights, and vice versa for provisioning context information and/or context locators relating to the second user,
   characterized in that:
d. the context vault is a location context vault for maintaining location context information and/or location context information locators in relation to locations,
e. the community context manager is a location context manager adapted to determine the location of a first user; and further in that:
f. the communication server is adapted to automatically retrieve location context information in relation to the location of the first user from the location context vault and automatically provide the location context information or parts thereof during the communication session to the second user in accordance with access rights, and vice versa. This is defined by claim 1.

Thus, the basic idea according to the current invention is to provide users involved in a communication session automatic access to location context information and/or location context locators related to the other user(s) involved in this communication session depending on the access rights granted by the other user(s) in the communication session. The location context information and/or context locators is/are maintained in a central or distributed, dedicated location media vault, whilst the access rights granted to other user(s) are maintained and checked in a central or distributed, dedicated community context manager. The location context vault is a central or distributed database that contains media content and/or context collectors such as a URL or locator pointing to a context device such as a webcam, a calendar application, a weather station, a locator (GPS), a blog, sensors, sensor managers and interpreters, etc. that stores or produces the context information for certain locations. The location context vault can be a separate network element, located somewhere in the network where it is easily accessible to other network elements, in particular to the communication server Also the community context manager or location context manager needs to be reachable for the other network elements. The access rights are predefined therein, i.e. prior to establishing the communication session. The access right definition can for instance be realized through profiling.

The automated provision of location context information according to the present invention is in particular advantageous for communication sessions between a fixed user with a terminal that supports graphical representation (e.g. a TV- or PC-screen used in a video conference or IPTV application) and a mobile user. During such TV-to-mobile communication sessions, prior art solutions share only limited information with respect to the mobile user, like for instance the name and phone number. Thanks to the current invention, the fixed user involved for instance in a video conference session with a mobile phone user can be provided with location based, live or non-live, context information that is inserted in the TV/PC-to-mobile phone call. The location context information may for example be streaming video provided by one or several webcams in close vicinity to the mobile user, local news, near relatives or friends, close by events (e.g. festivals), etc.

The current invention further relates to a context enriched communication method, as defined by claim 6.

An optional feature of the communication system according to the present invention is that it may comprise:
g. a context skin vault for maintaining a plurality of context skins, a context skin being a set of rules for graphical representation of context information; and
h. a context composition engine for composing during the communication session the context information in relation to the first user in accordance with a context skin selected by the second user, and vice versa for context information related to the second user. This option is specified in claim 2.

Thus, an additional advantage of the current invention is that the video or context information stream of the other party in the communication session, eventually coming from different context sources like media servers, webcams, etc., can be presented graphically on the basis of a selectable graphical skin. This way, the current invention overcomes the lack of attraction of existing video chat applications that typically have an unchanging screen composition over time by supporting format triggered context composition and presentation. The option is particularly useful in video call, video chat or video conference sessions.

An optional implementation choice, defined by claim 3, is that the context composition engine might be integrated in the communication server.

Indeed, the composition engine is typically a software application, responsible for the final composition of the graphical image or representation of the context information. Since the final image might be composed from information received from various sources, the composition engine must be located somewhere in the network.

As indicated by claim 4, the context information may comprises one or more of the following:
location information;
- calendar information;
- electronic programming guide information;
- multimedia content;
- webcam streaming (networked cameras, like home cameras, etc.);
- sensor information.

Obviously, this list is not exhaustive, as will be appreciated by any person skilled in the art of telecommunications.

As indicated by claim 5, a communication session in the context of the current invention may correspond to one of the following:
- a voice communication session between fixed and/or mobile phone users;
- a video communication session between fixed and/or mobile phone users;
- a text communication session between fixed and/or mobile phone users;
- a chat communication session between fixed and/or mobile phone users.

Again, this list is not exhaustive, as will be appreciated by the skilled person.

### Brief Description of the Drawings

Fig. 1 illustrates a prior art context enriched communication system and method;
Fig. 2 illustrates a first embodiment of the context enriched communication system and method according to the present invention, wherein the context information is location related information coming from webcams in the vicinity of a mobile user that participates to a communication session; and
Fig. 3 illustrates a second embodiment of the context enriched communication system and method according to the present invention, wherein a context skin vault and composition engine are used to enable format controlled presentation of video streams in video chats or video conference calls.

### Detailed Description of Embodiment(s)

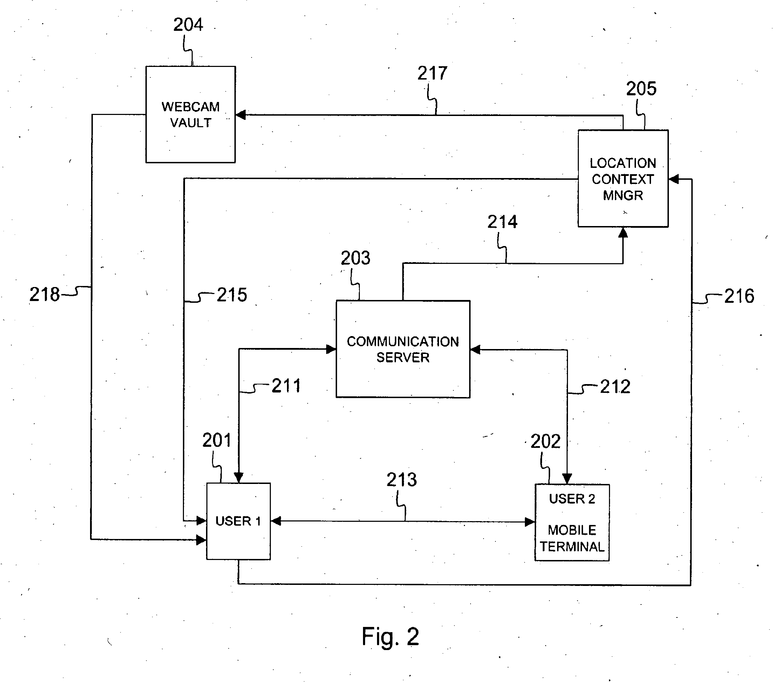

Fig. 2 shows a first instantiation of the system according to the present invention wherein a first, fixed user 201 establishes a video conference session with a second, mobile phone user 202 through a communication server 203. The video conference session is enriched with location based live content information that is inserted in the mixed TV/PC-to-mobile (or mobile PC) call by the webcam vault 204 and the location context manager 205 that provide the fixed user 201 with location information on the location of the mobile user 202. The fixed user 201 thus retrieves context information of the mobile user 202 which is location information. The context information in the example of Fig. 2 may be streaming video provided by one or more web-cams in the close vicinity of the mobile user 202. During the TV/video chat session, the fixed user 201 can browse on his TV or on another, preferred terminal through a list of webcams available in the mobile user's environment. Thereupon, one or more webcams will be displayed on the TV- or PC-monitor of the fixed user 201. The location based live content makes the communication session between the fixed user 201 and mobile user 202 more interesting, relevant and attractive.

Fig. 2 illustrates the sequence of steps in the fixed-to-mobile scenario enriched with location based context information. In a first step 211, the communication session is requested by the fixed user 201 and the request is handled by the communication server 203. The communication server 203 polls the availability of the mobile user 202 in step 212. It is assumed that the second user 202 only happens to have his mobile handset. Both peers are connected and the communication session is setup between the two users 201 and 202 in step 213. The communication server 203 now verifies with the location context manager 205 where the mobile user 202 is located and which live content sources are available in his/her neighbourhood. This is indicated by arrow 214 in Fig. 2. The location context manager 205 is able to determine the location of the mobile user 202 for instance from a GPS (Global Positioning System) like system, from triangulation via GSM or another cellular system or may have obtained the information from manual insertions, etc. The location context manager 205 maps the location of the second user 202 to certain content. The list of live location context sources in the neighbourhood of the second user 202 is made available to the TV terminal of the first user 201 in step 215. The first user 201 can then browse through the list of available live context sources and select one or more sources. The selection is communicated to the location context manager 205 in step 216. Alternatively, the webcam closest to the mobile user 202 might be selected automatically. The location context manager 205 maps the received request to the right live content source(s) and requests the webcam vault 204 to send the selected stream(s) to the first user 201. At last, the webcam vault 204 provides the requested live content item(s) to the TV or preferred terminal of the first user 201. This is indicated by reference 218 in Fig. 2.

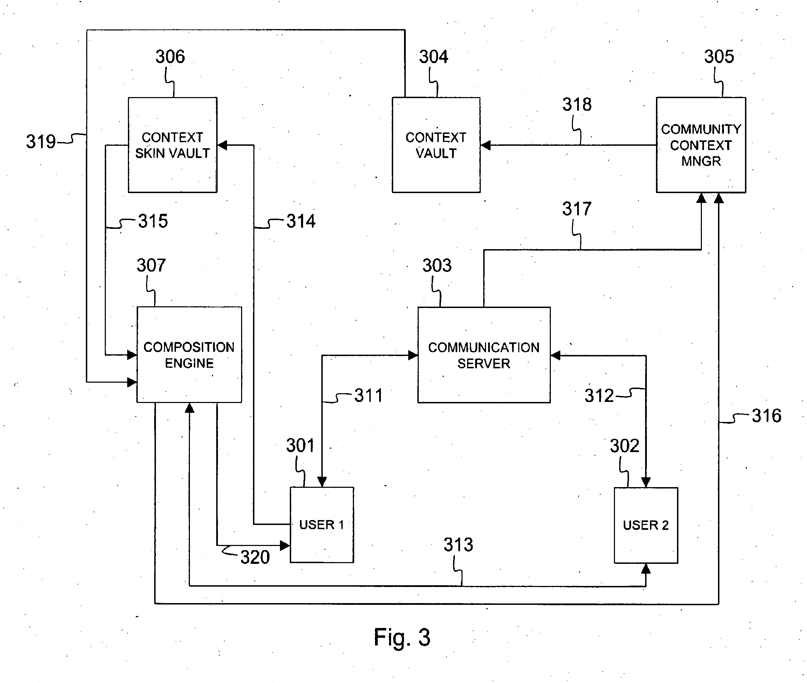

Fig. 3 illustrates a second embodiment of the current invention wherein graphically and contextually enriched video calls are made between a first user 301 and a second user 302. In addition to a context vault 304 and community context manager 305, the system depicted in Fig. 3 contains a context skin vault 306 and a context composition engine 307. The latter two network elements assist in presenting the video stream of the other party in the call or chat based on a selectable, graphical skin. Thus, the system of Fig. 3 provides people participating in a video call the possibility to select a graphical skin in which the other party's webcam stream and context information are combined in a graphical rich way on TV using for instance composition techniques like blue screen filtering, picture in picture, etc. The graphical skin triggers the community context manager 305 for the needed context type and the communication server 303 triggers the community context manager 305 for the accessible contexts, which are then combined with the communication streams via rules imposed via the graphical skin.

A context skin is a set of rules for graphical representation of context information, eventually including changing graphical layouts over time. When for instance a user selects a "News" skin, a full screen webcam vision will be provided initially, followed by a picture-in-picture screen showing content in the background and the webcam vision as a foreground picture-in-picture, followed by an image of a reporter on site with space for location inputs of the other party, his content, the time zones, etc.

Fig. 3 shows the sequence of steps followed to establish a graphical and context enriched video chat session between the first user 301 and the second user 302. Firstly, a communication session is requested by the first user 301 and the request is handled by the communication server 303. This is indicated by reference 311 in Fig. 3. The communication server 303 polls the availability of the second user 302 in step 312 and, if successful, connects both peers. The video communication session is setup. This is represented by reference 313 in Fig. 3 indicating that the second user 302 starts to receive video streams from the composition engine 307. The first user 301 now selects a skin amongst the graphical skins that are available in the context skin vault 306. This is indicated by 314 in Fig. 3. In the next step, 315, the selected skin is provided to the composition engine 307, by the context skin vault 306. The selected skin is loaded in the composition engine 307 and depending on the time and the required context type (e.g. the "News" skin given as an example here above requires at time T a background picture), the right context type is requested to the community context manager 305. This step is referenced by 316 in Fig. 3. In step 317, the communication server 303 verifies with the community context manager 305 which context information associated with the second user 302 can be made available to the first user 301, depending on the access rights that the second user 302 has granted to the first user 301. Vice versa, the communication server 303 verifies which context information relating to the first user 301 can be made accessible to the second user 302 during the video communication session. The context type requirement triggered by the graphical skin (step 316), and the accessible context information selection of the second user 302 (step 317) are then combined and a selection of suitable context items is requested to be sent from the context vault 304 to the first user 301 by the community context manager 305. This request is labelled 318 in Fig. 3. Thereupon, the requested context item(s) is/are provided to the composition engine 307 in step 319. Lastly, the composition engine 307 combines the graphical layout of the selected skin (received in step 315) at time T with the inputs for the video communication session (received in step 313) and the inputs of the context vault 306 (received in step 319) to provide a complete graphical enriched composition, which is shown on a terminal of the first user 301. The provisioning of the graphical enriched composition is indicated by arrow 320 in Fig. 3. Step 316, step 317, step 318, step 319 and step 320 are repeated during the execution of the skin until the video communication session is ended.

Although the present invention has been illustrated by reference to specific embodiments, it will be apparent to those skilled in the art that various changes and modifications may be made within the scope of the invention. It is therefore contemplated to cover any and all modifications, variations or equivalents that fall within the scope of the basic underlying principles disclosed and claimed in this patent application. For example, it is noticed that the above scenario's have been depicted for two users whereas the mechanisms for context enriched communication according to the present invention are obviously equally applicable to communication sessions wherein more than 2 users are participating. Further, it is remarked that the context information that is inserted to enrich the communication session can be extended to include non-user related context information like news headlines, world webcam streams, etc. that is offered by a generic context manager to all communicating parties during a communication session. Further, it is noticed that the invention is not restricted to certain implementation choices made in relation to the described embodiments. For instance, the means used to determine the location of a user in a fixed to mobile or mobile-to-mobile communication session (GPS, GSM, ...) are only given as examples. It will be understood by the skilled person that the nature of the means to locate the mobile user are not essential to the invention, so any variant technology could replace the above examples.

## Claims

1. A communication system comprising a communication network for interconnecting a plurality of users and a communication server (103; 203; 303) for establishing a communication session between at least a first user (101; 201; 301) and a second user (102; 202; 302) of said plurality of users, said communication system further comprising:
a. a context vault (104; 204; 304) for maintaining context information and/or context locators in relation to one or more of said plurality of users; and
b. a community context manager (105; 205; 305) for maintaining access rights in relation to said context information
c. said communication server (103; 203; 303) being adapted to automatically retrieve context information in relation to said first user (101; 201; 301) from said context vault (104; 204; 304) and being adapted to automatically provide said context information or parts thereof during said communication session to said second user (102; 202; 302) in accordance with said access rights, and vice versa,
**CHARACTERISED IN THAT**:
d. said context vault is a location context vault (204) for maintaining location context information and/or location context locators in relation to locations; and
e. said community context manager is a location context manager (205) further adapted to determine the location of said first user (201); and further **in that**:
f. said communication server (203) is adapted to automatically retrieve location context information in relation to said location of said first user (201) from said location context vault (204) and automatically provide said location context information or parts thereof during said communication session to said second user (202) in accordance with access rights, and vice versa.

2. A communication system according to claim 1,
**CHARACTERISED IN THAT** said communication system further comprises:
g. a context skin vault (306) for maintaining a plurality of context skins, a context skin being a set of rules for graphical representation of context information; and
h. a context composition engine (307) for composing during said communication session said context information in relation to said first user (301) in accordance with a context skin selected by said second user (302), and vice versa.

3. A communication system according to claim 2,
**CHARACTERIZED IN THAT** said context composition engine (307) is integrated in said communication server (303).

4. A communication system according to claim 1,
**CHARACTERIZED IN THAT** said context information comprises one or more of the following:
- location information;
- calendar information;
- electronic programming guide information;
- multimedia content;
- sensor information.

5. A communication system according to claim 1,
**CHARACTERIZED IN THAT** said communication session corresponds to one of the following:
- a voice communication session between fixed and/or mobile phone users;
- a video communication session between fixed and/or mobile phone users;
- a text communication session between fixed and/or mobile phone users;
- a chat communication session between fixed and/or mobile phone users.

6. A communication method in a communication network having a plurality of users, said communication method comprising establishing a communication session between at least a first user (101; 201; 301) and a second user (102; 202; 302) through a communication server (103; 203; 303),
**CHARACTERIZED IN THAT** said communication method further comprises:
a. maintaining location context information and/or location context information locators related to locations in a location context vault (204); and
b. determining the location of a first user (201); and
c. automatically retrieving location context information in relation to said location of said first user (201) from said location context vault (204) and automatically providing said location context information related to said first user (201) or parts thereof during said communication session to said second user (202) in accordance with access rights;
and vice versa.

## Patentansprüche

1. Kommunikationssystem, umfassend ein Kommunikationsnetzwerk, um eine Vielzahl von Nutzern miteinander zu verbinden, und einen Kommunikationsserver (103; 203; 303) für den Aufbau einer Kommunikationssitzung zwischen mindestens einem ersten Nutzer (101; 201; 301) und einem zweiten Nutzer (102; 202; 302) der besagten Vielzahl von Nutzern, wobei das besagte Kommunikationssystem umfasst:
a. Ein Kontextarchiv (104; 204; 304) zum Aufbewahren von Kontextinformationen und/oder Kontextlokalisierern in Bezug auf einen oder mehrere der besagten Vielzahl von Nutzern; und
b. einen Community-Kontextmanager (105; 205; 305) zum Aufbewahren von Zugriffsberechtigungen in Bezug auf die besagten Kontextinformationen;
c. einen Kommunikationsserver (103; 203; 303), welcher dazu ausgelegt ist, Kontextinformationen, die den besagten ersten Nutzer (101; 201; 301) betreffen, automatisch aus dem besagten Kontextarchiv (104; 204; 304) abzurufen, und dazu ausgelegt ist, die besagten Kontextinformationen oder Teile davon während der besagten Kommunikationssitzung automatisch an den besagten zweiten Nutzer (102; 202; 302) in Übereinstimmung mit den besagten Zugriffsberechtigungen bereitzustellen, und umgekehrt,
**DADURCH GEKENNZEICHNET, DASS**:
d. das besagte Kontextarchiv ein Standortkontextarchiv (204) zum Aufbewahren von Standortkontextinformationen und/oder Standortkontextlokalisierern in Bezug auf die Standorte ist; und
e. der besagte Community-Kontextmanager ein Standortkontextmanager ist (205) und weiterhin dazu ausgelegt ist, den Standort des besagten ersten Nutzers (201) zu ermitteln; und weiterhin, dass:
f. der besagte Kommunikationsserver (203) dazu ausgelegt ist, Standortkontextinformationen, welche den besagten Standort des besagten ersten Nutzers (201) betreffen, automatisch aus dem besagten Standortkontextarchiv (204) abzurufen und die besagten Standortkontextinformationen oder Teile davon während der besagten Kommunikationssitzung automatisch an den besagten zweiten Nutzer (202) in Übereinstimmung mit den besagten Zugriffsberechtigungen bereitzustellen, und umgekehrt.

2. Kommunikationssystem nach Anspruch 1,
**DADURCH GEKENNZEICHNET, DASS** das besagte Kommunikationssystem weiterhin umfasst:
g. Ein Kontext-Skin-Archiv (306) zum Aufbewahren einer Vielzahl von Kontext-Skins, wobei ein Kontext-Skin ein Satz von Regeln für die grafische Darstellung von Kontextinformationen ist; und
h. Einen Kontexterstellungsautomaten (307) zum Erstellen, während der besagten Kommunikationssitzung, der besagten den besagten ersten Nutzer (301) betreffenden Kontextinformationen gemäß eines von dem besagten zweiten Nutzer (302) ausgewählten Kontext-Skins, und umgekehrt.

3. Kommunikationssystem nach Anspruch 2,
**DADURCH GEKENNZEICHNET, DASS** der besagte Kontexterstellungsautomat (307) in dem besagten Kommunikationsserver (303) integriert ist.

4. Kommunikationssystem nach Anspruch 2,
**DADURCH GEKENNZEICHNET, DASS** die besagten Kontextinformationen eine oder mehrere der folgenden Informationen umfassen:
- Standortinformationen;
- Kalenderinformationen;
- Information in Bezug auf den elektronischen Programmierungsführer;
- Multimedia-Inhalt;
- Sensorinformationen.

5. Kommunikationssystem nach Anspruch 1,
**DADURCH GEKENNZEICHNET, DASS** die besagte Kommunikationssitzung einer der folgenden Sitzungen entspricht:
- Einer Sprachkommunikationssitzung zwischen Nutzern eines ortsfesten und/oder mobilen Telefons;
- einer Videokommunikationssitzung zwischen Nutzern eines ortsfesten und/oder mobilen Telefons;
- einer Textkommunikationssitzung zwischen Nutzern eines ortsfesten und/oder mobilen Telefons;
- einer Chat-Kommunikationssitzung zwischen Nutzern eines ortsfesten und/oder mobilen Telefons.

6. Kommunikationsverfahren in einem Kommunikationsnetzwerk mit einer Vielzahl von Nutzern, wobei das besagte Kommunikationsverfahren das Aufbauen einer Kommunikationssitzung zwischen mindestens einem ersten Nutzer (101; 201; 301) und einem zweiten Nutzer (102; 202; 302) über einen Kommunikationsserver (103, 203, 303) umfasst,
**DADURCH GEKENNZEICHNET, DASS** das besagte Kommunikationsverfahren weiterhin umfasst:
a. Aufbewahren von Standortkontextinformationen und/oder Standortkontextinformationslokalisierern, welche Standorte betreffen, in einem Standortkontextarchiv (204); und
b. Ermitteln des Standorts eines ersten Nutzers (201); und
c. automatisches Abrufen von den besagten Standort des besagten ersten Nutzers (201) betreffenden Standortkontextinformationen aus dem besagten Standortkontextarchiv (204) sowie automatisches Bereitstellen der besagten den besagten ersten Nutzer (201) betreffenden Standortkontextinformationen oder von Teilen davon während der besagten Kommunikationssitzung an den besagten zweiten Nutzer (202) in Übereinstimmung mit den Zugriffsberechtigungen;
und umgekehrt.

## Revendications

1. Système de communication comprenant un réseau de communication pour interconnecter une pluralité d'utilisateurs et un serveur de communication (103 ; 203 ; 303) pour établir une session de communication entre au moins un premier utilisateur (101 ; 201 ; 301) et un deuxième utilisateur (102 ; 202 ; 302) parmi ladite pluralité d'utilisateurs, ledit système de communication comprenant en outre :
a. une chambre forte de contextes (104 ; 204 ; 304) pour conserver des informations de contexte et/ou des localisateurs de contextes concernant un ou plusieurs parmi ladite pluralité d'utilisateurs ; et
b. un gestionnaire de contextes communautaire (105 ; 205 ; 305) pour conserver des droits d'accès concernant lesdites informations de contexte
c. ledit serveur de communication (103 ; 203 ; 303) étant adapté pour récupérer automatiquement des informations de contexte concernant ledit premier utilisateur (101 ; 201 ; 301) à partir de ladite chambre forte de contextes (104 ; 204 ; 304) et étant adapté pour fournir automatiquement lesdites informations de contexte, ou des parties de celles-ci durant ladite session de communication, audit deuxième utilisateur (102 ; 202 ; 302) conformément auxdits droits d'accès, et inversement,
CHARACTÉRISÉ EN CE QUE :
d. ladite chambre forte de contextes est une chambre forte de contextes de localisation (204) pour conserver des informations de contexte de localisation et/ou des localisateurs de contexte de localisation concernant les localisations ; et
e. ledit gestionnaire de contextes communautaire est un gestionnaire de contexte de localisation (205) adapté en outre pour déterminer la localisation dudit premier utilisateur (201) ; et en outre en ce que :
f. ledit serveur de communication (203) est adapté pour récupérer automatiquement des informations de contexte de localisation concernant ladite localisation dudit premier utilisateur (201) à partir de ladite chambre forte de contextes de localisation (204) et fournir automatiquement lesdites informations de contexte de localisation, ou des parties de celles-ci durant ladite session de communication, audit deuxième utilisateur (202) conformément aux droits d'accès, et inversement.

2. Système de communication selon la revendication 1,
**CARACTÉRISÉ EN CE QUE** ledit système de communication comprend en outre :
g. une chambre forte d'habillage de contexte (306) pour conserver une pluralité d'habillages de contexte, un habillage de contexte étant un ensemble de règles de représentation graphique des informations de contexte ; et
h. un moteur de composition de contexte (307) pour composer durant ladite session de communication lesdites informations de contexte concernant ledit premier utilisateur (301) conformément à un habillage de contexte sélectionné par ledit deuxième utilisateur (302), et inversement.

3. Système de communication selon la revendication 2,
**CARACTÉRISÉ EN CE QUE** ledit moteur de composition de contexte (307) est intégré dans ledit serveur de communication (303).

4. Système de communication selon la revendication 1,
**CARACTÉRISÉ EN CE QUE** lesdites informations de contexte comprennent un ou plusieurs des éléments suivants :
- des informations de localisation ;
- des informations d'agenda ;
- des informations de guide de programmation électronique ;
- un contenu multimédia ;
- des informations de capteur.

5. Système de communication selon la revendication 1,
**CARACTÉRISÉ EN CE QUE** ladite session de communication correspond à une des sessions suivantes :
- une session de communication vocale entre des utilisateurs de téléphones fixes et/ou mobiles ;
- une session de communication vidéo entre des utilisateurs de téléphones fixes et/ou mobiles ;
- une session de communication textuelle entre des utilisateurs de téléphones fixes et/ou mobiles ;
- une session de communication par clavardage entre des utilisateurs de téléphones fixes et/ou mobiles.

6. Procédé de communication dans un réseau de communication ayant une pluralité d'utilisateurs, ledit procédé de communication comprenant l'établissement d'une session de communication entre au moins un premier utilisateur (101 ; 201 ; 301) et un deuxième utilisateur (102 ; 202 ; 302) par l'intermédiaire d'un serveur de communication (103 ; 203 ; 303),
**CARACTÉRISÉ EN CE QUE** ledit procédé de communication comprend en outre les étapes suivantes :
a. conserver des informations de contexte de localisation et/ou des localisateurs d'informations de contexte de localisation concernant des localisations dans une chambre forte de contextes de localisation (204) ; et
b. déterminer la localisation d'un premier utilisateur (201) ; et
c. récupérer automatiquement des informations de contexte de localisation concernant ladite localisation dudit premier utilisateur (201) à partir de ladite chambre forte de contextes de localisation (204) et fournir automatiquement lesdites informations de contexte de localisation concernant ledit premier utilisateur (201), ou des parties de celles-ci durant ladite session de communication, audit deuxième utilisateur (202) conformément aux droits d'accès ;
et inversement.
